# EUROPEAN PATENT SPECIFICATION

(11) **EP 1 265 306 B1**
(45) Date of publication and mention of the grant of the patent: **07.12.2005**
(21) Application number: 01906313.0
(22) Date of filing: 26.02.2001
(51) Int. Cl.: H01M 10/04, H01M 6/02

(54) **PRODUCTION METHOD OF WOUND ELECTRODES FOR BATTERIES**
HERSTELLUNGSVERFAHREN FÜR GEWICKELTE ELEKTRODEN FÜR BATTERIEN
PROCEDE DE PRODUCTION D'ELECTRODES ENROULEES POUR DES ACCUMULATEURS

(30) Priority: 25.02.2000 JP 2000049522
(43) Date of publication of application: 11.12.2002
(73) Proprietor: HONDA GIKEN KOGYO KABUSHIKI KAISHA, Minato-ku, Tokyo 107-0062 (JP); Sanoh Kogyo Kabushiki Kaisha, Koga-shi, Ibaraki-ken 306-0023 (JP)
(72) Inventor: SUZUKI, Hiroyuki, Wako-shi, Saitama 351-0113 (JP); ARIGA, Kyoichi, Wako-shi, Saitama 351-0113 (JP); TAKAYASU, Hiroyuki, Koga-shi, Ibaraki 306-0041 (JP); YASUKAWA, Seiichiro, Koga-shi, Ibaraki 306-0041 (JP)
(74) Representative: Liesegang, Roland
(86) International application number: PCT/JP2001/001423
(87) International publication number: WO 2001/063685

(56) References cited:
- EP-A- 0 639 865
- JP-A- 8 306 362
- JP-A- 2001 068 142
- US-A- 3 734 778
- US-A- 4 802 275
- PATENT ABSTRACTS OF JAPAN vol. 2000, no. 06, 22 September 2000 (2000-09-22) & JP 2000 076942 A (HITACHI CABLE LTD; HITACHI AIC INC), 14 March 2000 (2000-03-14)

## Description

### TECHNICAL FIELD

The present invention relates generally to a method for producing an electrode roll (so-called "jelly roll") for a cell, such as a sealed cylindrical nickel-cadmium cell, the electrode roll having a structure wherein a positive electrode plate and a negative electrode plate are wound such that they are alternately piled on each other via a separator.

### BACKGROUND ART

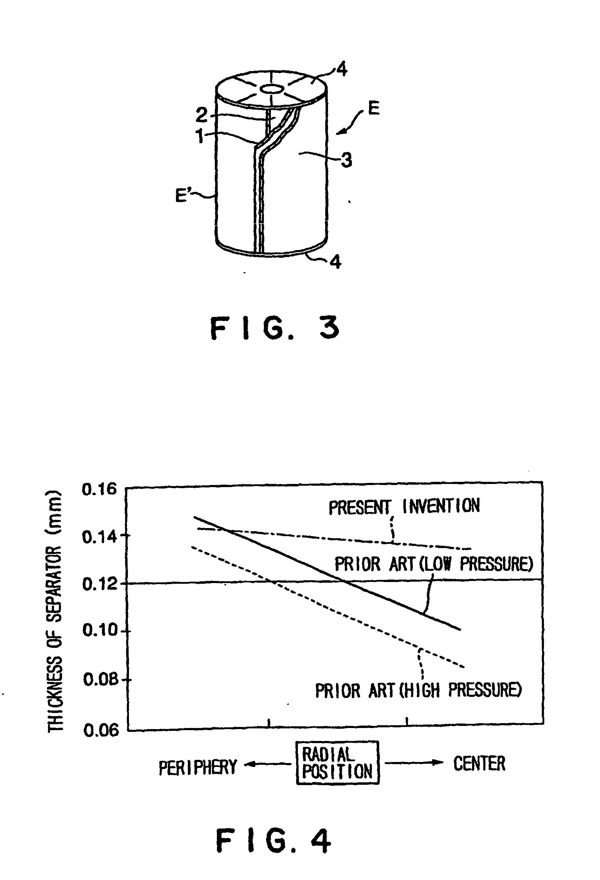

FIG. 3 shows the structure of a typical electrode roll for a cell, to which the present invention is applied. The electrode roll E shown in FIG. 3 has an electrode roll body E' having a structure wherein a plurality of electrode plates (a positive electrode plate 2 and a negative electrode plate 3) are wound such that they are alternately piled on each other in radial direction via a separator 1. This electrode roll E has disk-shaped current collectors 4 welded to both ends of the electrode roll body E'. The separator 1 is formed of, e.g. a synthetic fiber unwoven fabric serving as an electrolyte absorber. The positive electrode plate 2 and the negative electrode plate 3 are formed of a material mainly containing a metal according to the kind of a cell, respectively.

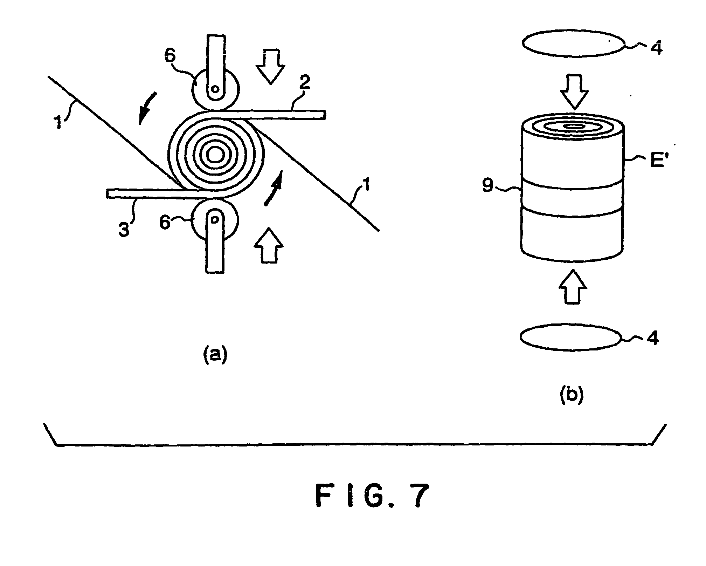

FIG. 7 shows a conventional method for producing the above described electrode roll E, and an example of a step of housing the produced electrode roll E in an outer packaging can.

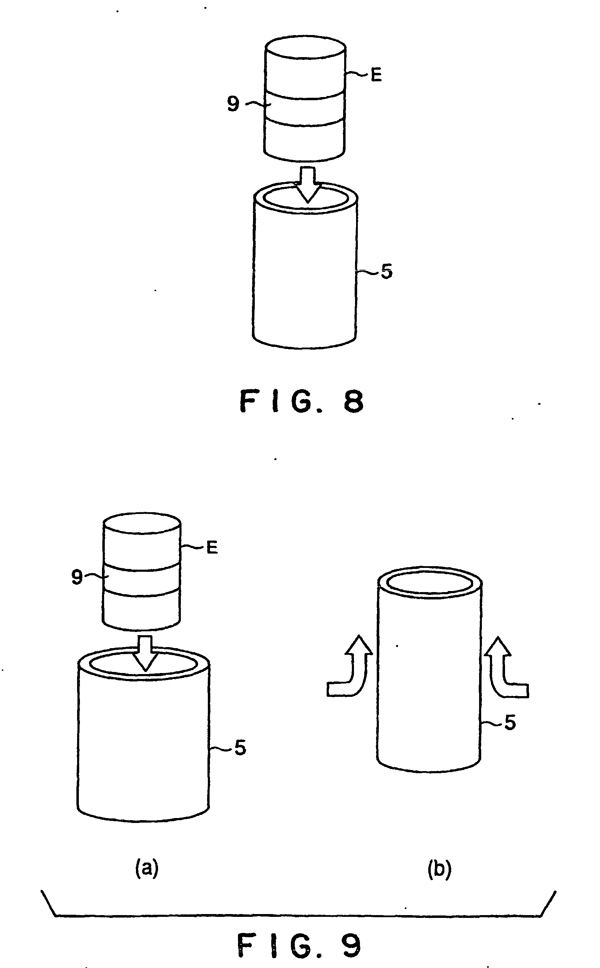

In the producing method shown in FIG. 7, a separator 1 is first sandwiched between a flat plate positive electrode plate 2 and a flat plate negative electrode plate 3 to be wound while being pressed in a diametral direction by a pair of winding rolls 6, to form an electrode roll body E' (FIG. 7(a)). Then, a tape 9 is wound onto the outer periphery of the electrode roll body E' to temporally retain its form, and disk-shaped current collectors 4 are welded to both ends thereof (FIG. 7(b) to complete an electrode roll. The electrode roll E thus produced is inserted into an outer packaging can 5 as shown in FIG. 8.

In the above described conventional method for producing the electrode roll for the cell, there are the following problems.

First, the diameter of the electrode roll E is preferably smaller than the inside diameter of the outer packaging can 5 by about 0.1 to 0.2 mm, in order to reduce an internal resistance of the cell by insuring moderate contact of the outer peripheral surface of the electrode roll E with the outer packaging can 5, while considering the insertion of the electrode roll E into the outer packaging can 5.

However, since the unevenness of the diameters of the electrode rolls E produced by the conventional producing method is large, it is required to make the diameter of the electrode roll E slightly smaller than the above described desired diameter so as to prevent the electrode roll E from being difficult to be inserted into the outer packaging can 5. If the diameter of the electrode roll E is too small, it is not possible to insure contact of the outer peripheral surface of the electrode roll E with the outer packaging can 5, so that the internal resistance of the cell increases. In addition, the contact pressure between the outer peripheral surface of the electrode roll E and the outer packaging can 5 does not act, so that there is some possibility that active materials may fall from the electrode plates on the outer peripheral surface of the electrode roll E.

On the other hand, as shown in FIG. 9, there is taken a conventional measure to draw the outer packaging can 5 to reduce the diameter thereof (FIG. 9(b)) after inserting the electrode roll E into the outer packaging can 5 having a larger diameter. In this case, it is possible to surely cause the outer peripheral surface of the electrode roll E to contact the outer packaging can 5 by drawing the outer packaging can 5 until the inside diameter of the outer packaging can 5 is smaller than the initial diameter of the electrode roll E. However, there is the possibility of problems on cracks and/or short circuit in the electrode plates 2 and 3 since the electrode roll E is radially compressed.

In general, cracks on the surfaces of the electrode plates 2 and 3, and crushing (decrease of thickness) of the separator 1 may be caused during the production of the electrode roll E. The cracks on the surfaces of the electrode plates 2 and 3 have a bad influence on life of the cell. The crushing of the separator 1 has an influence on the ionic conduction of the electrolyte and so forth to cause a deterioration of discharge characteristics and a shortening of life of the cell. In particular, the shortening of life of the cell is promoted by a process "expansion of the negative electrode plate 3 decrease of thickness of the separator 1 decrease of amount of electrolyte in the separator 1 decrease of output of the cell" as the deterioration with age of the cell.

However, in the conventional producing method, if the pressure applied by the winding rolls 6 during the formation of the electrode roll body E' is high, cracks in the electrode plates 2 and 3 decreases, whereas the crushing of the separator 1 increases, and if the pressure applied by the winding rolls 6 is low, the crushing of the separator 1 decreases, whereas cracks in the electrode plates 2 and 3 increases.

As described above, in the conventional method for producing the electrode roll for the cell, it is difficult to meet all of the requirements of the insuring of appropriate contact of the outer peripheral surface of the electrode roll E with the outer packaging can 5, the inhibiting of cracks in the electrode plates 2 and 3, and the inhibiting of the crushing of the separator 1. Thus, there is a problem on the influence on performance and life of the cell using the electrode roll E.

### DISCLOSURE OF THE INVENTION

The present invention has been made in view of above points, and it is an object of the present invention to provide a method for producing an electrode roll for a cell, the method being capable of insuring appropriate contact of the outer peripheral surface of an electrode roll with an outer packaging can by decreasing the unevenness of the diameters of the electrode rolls, and capable of inhibiting the crushing of a separator while inhibiting cracks of an electrode plate.

In order to accomplish this object, according to the present invention, there is provided a method for producing an electrode roll for a cell, wherein a plurality of electrode plates are wound such that the electrode plates are alternately piled on each other via a separator in radial direction, the method comprising: a winding step of sandwiching the separator between the electrode plates each having a substantially flat-plate shape, and winding the electrode plates while pressing the electrode plates in a diametral direction by means of a winding roll, to form an electrode roll body; a holding step of holding the electrode roll body in a diametral direction against an elastic force causing a diametral expansion of the electrode roll body; an expanding step of elastically expanding the diameter of the electrode roll body to a diameter of a circular hole formed in a frame, by releasing the holding of the electrode roll body after the held electrode roll body is inserted into the circular hole; and a fixing step of fixing the expanded electrode roll body so as to prevent the diameter of the electrode roll body from varying, and extracting the fixed electrode roll body from the frame.

According to this producing method, after the diameter of the electrode roll body is elastically expanded to the predetermined diameter, the electrode roll body is fixed so as to prevent its diameter from varying, so that the unevenness of the diameters of the electrode rolls can be reduced. Thus, it is possible to insure appropriate contact of the outer peripheral surface of the electrode roll with the outer packaging can to reduce internal resistance in the cell.

Since the diameter of the electrode roll body is elastically expanded to be loosened after the electrode roll body is wound while being pressed in the diametral direction by means of the winding roll, the thickness of the separator can be recovered during the subsequent diameter expanding of the electrode roll body even if the pressure applied by the winding roll during winding is high. Thus, the crushing of the separator of the produced electrode roll can be inhibited while inhibiting cracks in the electrode plates.

In the above described producing method, the holding of the electrode roll body at the holding step may be carried out by clamping the electrode roll body in a diametral direction by means of at least one pair of clamping bodies.

In the above described producing method, the holding of the electrode roll body at the holding step may be carried out by maintaining a state that the electrode roll body is pressed by the winding roll, continuously from the winding step. By carrying out such holding, it is not required to additionally use means for holding the electrode roll body, so that it is possible to simplify the manufacturing facility.

In the above described producing method, fixing at the fixing step may be carried out by welding current collectors to both ends of the electrode roll body.

### BRIEF DESCRIPTION OF THE DRAWINGS

FIG. 1 is a schematic view showing winding steps of a preferred embodiment of a method for producing an electrode roll for a cell according to the present invention, in order of (a) and (b);
FIG. 2 is a schematic view showing a preferred embodiment of a method for producing an electrode roll for a cell according to the present invention, in order of steps (a) through (e);
FIG. 3 is a partially-broken perspective view showing the structure of a typical electrode roll for a cell, to which the present invention is applied;
FIG. 4 is a graph showing a difference in thickness of a separator with respect to radial positions in an electrode roll;
FIG. 5 is a graph showing a difference in liquid retention with respect to thickness of a separator;
FIG. 6 is a graph showing a difference in discharge capacity of a cell with respect to thickness of a separator at each discharge rate;
FIG. 7 is a schematic view showing an example of a conventional method for producing an electrode roll for a cell, in order of steps (a) and (b);
FIG. 8 is a perspective view showing the state that a completed electrode roll is inserted into an outer packaging can; and
FIG. 9 is a perspective view showing a case where the outer packaging can including the electrode roll is drawn to reduce the diameter thereof, in order of (a) and (b).

### BEST MODE FOR CARRYING OUT THE INVENTION

Referring to the accompanying drawings, a preferred embodiment of the present invention will be described below.

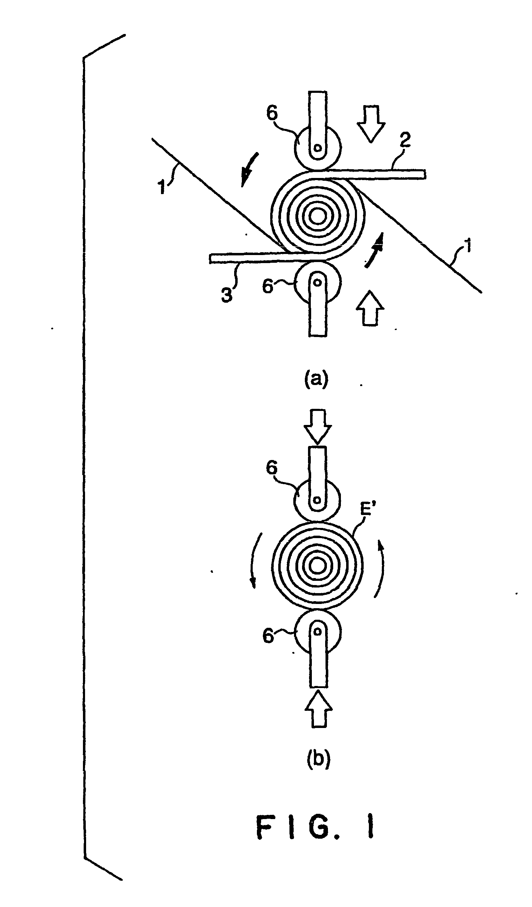

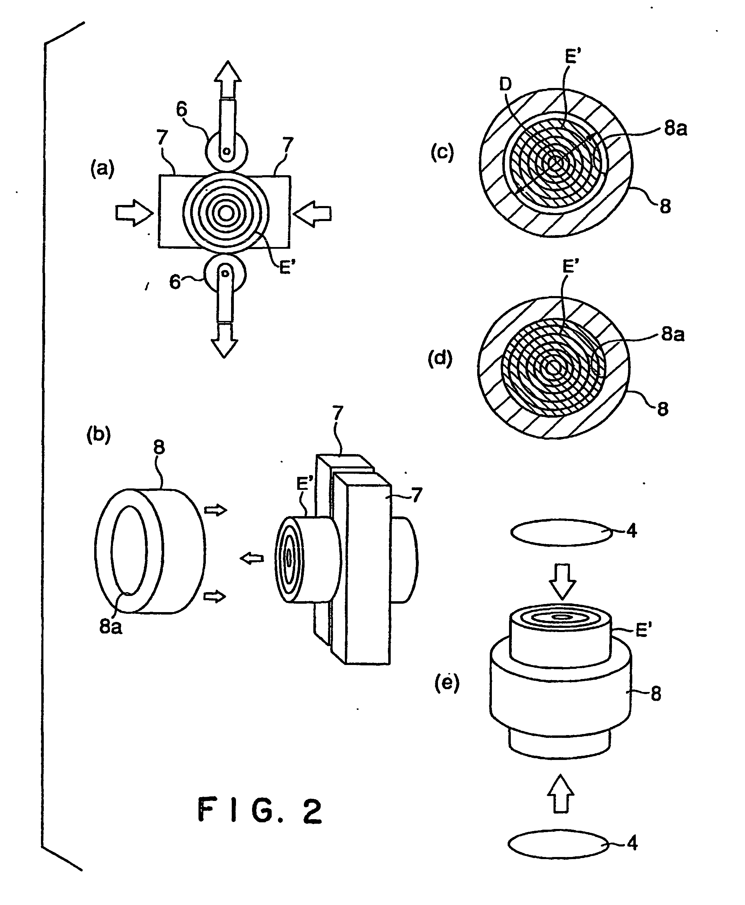

FIGS. 1 and 2 show a preferred embodiment of a method for producing an electrode roll for a cell according to the present invention. In the preferred embodiment of the present invention shown in FIGS. 1 and 2, the same reference numbers are given to the same components as those in the typical electrode roll shown in FIG. 3, and the preferred embodiment will be described also referring to FIGS. 3 through 6 as the occasion demands.

### [Construction]

### <Electrode roll>

First, as shown in FIG. 3, a typical electrode roll, to which the present invention is applied, includes an electrode roll body E' having a structure wherein a plurality of electrode plates (a positive electrode plate 2 and a negative electrode plate 3) are wound such that they are alternately piled on each other in radial direction via a separator 1. This electrode roll E further includes disk-shaped current collectors 4 welded to both ends of the electrode roll body E'.

The separator 1 is formed of, e.g. a synthetic fiber unwoven fabric serving as an electrolyte absorber. For example, a polyamide or polypropylene fiber is used as the synthetic fiber. The positive electrode plate 2 and the negative electrode plate 3 are formed of a material mainly containing a metal according to the kind of a cell, respectively. For example, in the case of a sealed nickel-cadmium cell, the positive electrode plate 2 is an electrode plate wherein a nickel-containing active material is held in a substrate, such as a porous nickel substrate, and the negative electrode plate 3 is an electrode plate wherein a cadmium-containing active material is held in the same substrate.

### <Producing Method>

Referring to FIGS. 1 and 2, a method for producing an electrode roll for a cell in this preferred embodiment will be described in order of steps.

First, as shown in FIG. 1, a positive electrode plate 2 and a negative electrode plate 3, each having a flat-plate shape, are wound with a separator 1 sandwiched between the electrode plates 2 and 3, while being pressed in a diametral direction by means of a pair of winding rolls 6, to form an electrode roll body E' (FIG. 1(b)) (winding step).

Then, the electrode roll body E' formed in the "winding step" is held in a diametral direction against an elastic force causing a diameteral expansion of the electrode roll body E' (holding step). Holding of the electrode roll body E' at this holding step is carried out by clamping the electrode roll body E' in a diametral direction, e.g., by means of a pair of chucks (clamping bodies) 7 as shown in FIG. 2(a).

Then, as shown in FIGS. 2(b) and 2(C), a frame 8 having a circular hole 8a having a predetermined diameter D is prepared, and the electrode roll body E' held in a diametral direction is inserted into the circular hole 8a of the frame 8 so as to be pushed out of the chucks 7. Thereafter, as shown in FIG. 2(d), the holding in a diametral direction by the pair of chucks 7 is released to expand the diameter of the electrode roll body E' to the diameter D of the circular hole 8a elastically, i.e. its own elasticity (expanding step).

Then, after the expanded electrode roll body E' is fixed so as to prevent its diameterD fromvarying, the fixed electrode roll body E' is extracted from the frame 8 (fixing step). Fixing of the electrode roll body E' at this fixing step is carried out , e.g., by welding the current collectors 4 to both ends of the electrode roll body E' before the electrode roll body E' is extracted from the frame 8, as shown in FIG. 2(e). The electrode roll E completed by the above described producing steps is inserted into the outer packaging can 5 in the same manner as that shown in FIG. 8 (however, the tape 9 is omitted in this preferred embodiment). The above described predetermined diameter D is set to be smaller than the inside diameter of the outer packaging can 5 by, e.g., about 0.1 to 0.2 mm, considering the unevenness of dimensions of the outer packaging cans 5.

### [Effect]

The effect of this preferred embodiment with the above described construction will be described below.

According to this preferred embodiment, after the diameter of the electrode roll body E' is elastically expanded to the predetermined diameter D, the electrode roll body E' is fixed so as to prevent its diameter D from varying, so that the unevenness of diameters of the electrode rolls E can be reduced. Thus, it is possible to insure appropriate contact of the outer peripheral surface of the electrode roll E with the outer packaging can 5 to reduce internal resistance in the cell.

According to this preferred embodiment, it is possible to increase the contact area of the outer peripheral surface of the electrode roll E with the outer packaging can 5, because it is not required to wind a tape onto the outer periphery of the electrode roll body E' unlike the conventional method. Thus, it is possible to further reduce internal resistance in the cell.

Since the diameter of the electrode roll body E' is elastically expanded to be loosened after the electrode roll body E' is wound while being pressed in a diametral direction by means of the winding rolls 6, the thickness of the separator 1 can be recovered during the subsequent diameter expanding of the electrode roll body E' even if the pressure applied by the winding rolls 6 during winding is high. Thus, the crushing of the separator 1 of the produced electrode roll can be inhibited while inhibiting cracks in the electrode plates 2 and 3.

The results of experiments with respect to the thickness of a separator are shown in FIGS. 4 through 6.

First, FIG. 4 shows a difference in thickness of the separator with respect to radial positions in the electrode roll. As can be seen from FIG. 4, the thickness of a separator in conventional producing methods rapidly decreases from the outer periphery of the electrode roll toward the center thereof when the winding pressure (the pressure applied by the winding rolls) is both high and low.

On the other hand, it can be seen that the thickness of the separator in the producing method according to the present invention is substantially equal to that in conventional methods at the outermost periphery of the electrode roll, whereas it only slightly decreases from the outer periphery toward the center, so that the crushing of the separator is substantially inhibited as a whole.

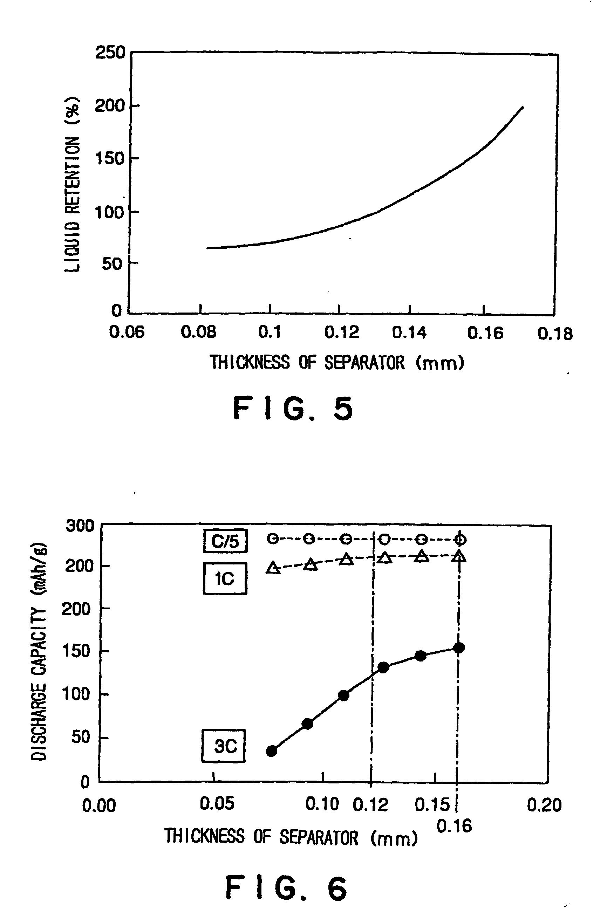

FIG. 5 shows the variation in liquid retention (electrolyte retention) with respect to the thickness of the separator. As can be seen from FIG. 5, the liquid retention increases as the thickness of the separator increases. Due to this difference in liquid retention, the thickness of the separator influences the discharge capacity of the cell.

FIG. 6 shows a difference in discharge capacity of a cell with respect to the thickness of a separator every discharge rate (C-rate). As can be seen from FIG. 6, the discharge capacity increases as the thickness of the separator increases (within the range of not more than 0.16 mm) particularly in the case of a high discharge rate (3C).

In this case, it can be said that the preferable range of the thickness of the separator is a range of from about 0.12 to 0.16 mm. It can be seen that the thickness of the separator according to the producing method of the present invention is held in the preferable range of from 0.12 to 0.16 over the whole electrode roll as shown in FIG. 4.

As described above, by using the electrode roll produced by the producing method in this preferred embodiment, it is possible to reduce internal resistance due to appropriate contact of the electrode roll with the outer packaging can, to inhibit cracks in the surface of the electrode plates, and to optimize the thickness of the separator over the whole electrode roll. Thus, it is possible to improve performance of the cell using the electrode roll and to extend the life thereof.

### [Modifications]

Holding of the electrode roll body E' at the above described "holding step" can be carried out by maintaining the state that the electrode roll body E' is pressed by the winding rolls 6, continuously from the above described "winding step," while omitting the clamping by the pair of chucks 7. Since it is not required to additionally use means, such as the chucks 7, for holding the electrode roll body, it is possible to simplify the manufacturing facility.

The present invention can be applied to other kind of cells, such as sealed cylindrical nickel-metal hydride (Ni-MH) cells, not only to the sealed cylindrical nickel-cadmium cell described as an example, if the cells use the above described electrode roll.

## Claims

1. A method for producing an electrode roll (E) for a cell, wherein a plurality of electrode plates (2,3) are wound such that said electrode plates are alternately piled on each other via a separator (1) in radial direction, said method comprising:
a winding step of sandwiching said separator (1) between said electrode plates (2,3) each having a substantially flat-plate shape, and winding said electrode plates while pressing said electrode plates in a diametral direction by means of a winding roll (6), to form an electrode roll body (E);
a holding step of holding said electrode roll body in a diametral direction against an elastic force causing a diametral expansion of said electrode roll body;
an expanding step of elastically expanding the diameter of said electrode roll body to a diameter of a circular hole (8a) formed in a frame (8), by releasing the holding of said electrode roll body after said held electrode roll body is inserted into the circular hole; and
a fixing step of fixing said expanded electrode roll body so as to prevent the diameter of said electrode roll body from varying, and extracting said fixed electrode roll body from said frame.

2. A method for producing an electrode roll for a cell as set forth in claim 1, wherein the holding of said electrode roll body (E') at said holding step is carried out by clamping said electrode roll body in a diametral direction by means of at least one pair of clamping bodies (7,7).

3. A method for producing an electrode roll for a cell as set forth in claim 1, wherein the holding of said electrode roll body at said holding step is carried out by maintaining a state that said electrode roll body is pressed by said winding roll (6), continuously from said winding step.

4. A method for producing an electrode roll for a cell as set forth in any of claims 1 through 3, wherein fixing of said electrode roll body (E') at said fixing step is carried out by welding current collectors (4) to both ends of said electrode roll body.

## Patentansprüche

1. Verfahren zum Herstellen einer Elektrodenrolle (E) für eine Zelle, wobei mehrere Elektrodenplatten (2, 3) derart gewickelt werden, daß die Elektrodenplatten über ein Trennmittel (1) in radialer Richtung abwechselnd gestapelt werden, mit folgenden Verfahrensschritten:
ein Wicklungsschritt, bei dem das Trennmittel (1) zwischen die Elektrodenplatten (2, 3) eingefügt wird, wobei die Platten jeweils im wesentlichen flache Plattenform haben, und bei dem die Elektrodenplatten gewickelt werden, während die Elektrodenplatten mittels einer Wickelrolle (6) in eine diametrale Richtung gedrückt werden, um einen Elektrodenrollenkörper (E) zu bilden;
einen Halteschritt, bei dem der Elektrodenrollenkörper in einer diametralen Richtung gegen eine elastische Kraft gehalten wird, wodurch eine diametrale Ausdehnung des Elektrodenrollenkörpers verursacht wird;
ein Erweiterungsschritt, bei dem der Durchmesser des Elektrodenrollenkörpers auf einen Durchmesser eines kreisförmigen Loches (8a), das in einem Rahmen (8) ausgebildet ist, elastisch erweitert wird, indem das Halten des Elektrodenrollenkörpers gelöst wird, nachdem der gehaltene Elektrodenrollenkörper in das kreisförmige Loch eingefügt wurde; und
ein Fixierschritt, bei dem der erweiterte Elektrodenrollenkörper befestigt wird, um zu verhindern, daß sich der Durchmesser des Elektrodenrollenkörpers ändert, und der befestigte Elektrodenrollenkörper aus dem Rahmen herausgezogen wird.

2. Verfahren zum Herstellen einer Elektrodenrolle für eine Zelle nach Anspruch 1, wobei das Halten des Elektrodenrollenkörpers (E') in dem Halteschritt ausgeführt wird, indem der Elektrodenrollenkörper in einer diametralen Richtung mit Hilfe wenigstens eines Paares von Klemmkörpern (7, 7) eingeklemmt wird.

3. Verfahren zum Herstellen einer Elektrodenrolle für eine Zelle nach Anspruch 1, wobei das Halten des Elektrodenrollenkörpers in dem Halteschritt ausgeführt wird, indem ein Zustand aufrechterhalten wird, in dem der Elektrodenrollenkörper in dem Wickelschritt von der Wicklungsrolle (6) kontinuierlich gedrückt wird.

4. Verfahren zum Herstellen einer Elektrodenrolle für eine Zelle nach einem der Ansprüche 1 bis 3, wobei das Fixieren des Elektrodenrollenkörpers (E') in dem Fixierschritt ausgeführt wird, indem Stromkollektoren (4) an beide Enden des Elektrodenrollenkörpers angeschweißt werden.

## Revendications

1. Procédé pour fabriquer un électrode rouleau (E) pour une pile, dans lequel les plaques d'électrodes d'une pluralité de plaques d'électrodes (2,3) sont enroulées de telle manière que les plaques d'électrodes soient empilées de manière alternée les unes sur les autres par l'intermédiaire d'un séparateur (1) dans une direction radiale, ledit procédé comprenant :
une étape consistant à enrouler en prenant en sandwich ledit séparateur (1) entre lesdites plaques d'électrodes (2, 3) chacune ayant la forme d'une plaque sensiblement plate, et en enroulant lesdites plaques d'électrodes tout en comprimant lesdites plaques d'électrodes dans une direction diamétrale au moyen d'un rouleau enrouleur (6), pour former un corps de rouleau électrode (E) ;
une étape consistant à maintenir en maintenant ledit corps de rouleau électrode dans une direction diamétrale en s'opposant à une force élastique provoquant une dilatation diamétrale dudit corps de rouleau électrode ;
une étape consistante à dilater en dilatant de manière élastique le diamètre dudit corps de rouleau électrode jusqu'au diamètre d'un trou circulaire (8a) formé dans un cadre (8), en relâchant le maintien dudit corps de rouleau électrode après avoir inséré ledit corps de rouleau électrode maintenu dans le trou circulaire ; et
une étape consistant à fixer en fixant ledit corps de rouleau électrode dilaté de manière à empêcher le diamètre dudit corps de rouleau électrode de varier, et en extrayant ledit corps de rouleau électrode fixé dudit cadre.

2. Procédé pour fabriquer un rouleau électrode pour une pile comme exposé dans la revendication 1, dans lequel le maintien dudit corps de rouleau électrode (E'), dans l'étape consistant à maintenir, est effectué en pinçant ledit corps de rouleau électrode dans une direction diamétrale au moyen d'au moins une paire d'éléments pour pincer (7, 7).

3. Procédé pour fabriquer un rouleau électrode pour une pile comme exposé dans la revendication 1, dans lequel le maintien dudit corps de rouleau électrode, dans l'étape consistant à maintenir, est effectué en maintenant un état dans lequel le corps de rouleau électrode est comprimé par ledit rouleau enrouleur (6), d'une manière continue à partir de l'étape consistant à enrouler.

4. Procédé pour fabriquer un rouleau électrode pour une pile comme exposé dans l'une quelconque des revendications 1 à 3, dans lequel la fixation dudit corps de rouleau électrode (E'), à l'étape consistant à fixer, est effectuée en soudant des collecteurs de courant (4) aux deux extrémités dudit corps de rouleau électrode.
